# EUROPEAN PATENT SPECIFICATION

(11) **EP 2 428 666 B1**
(45) Date of publication and mention of the grant of the patent: **29.05.2013**
(21) Application number: 11180835.8
(22) Date of filing: 10.09.2011
(51) Int. Cl.: F02D 9/10, F02D 11/10, F16K 24/00, F16K 27/02

(54) **Valve for regulating the flow of a gas in an internal combustion engine provided with a pressure compensation valve**
Ventil zur Regelung eines Gasstromes in einer Brennkraftmaschine ausgestattet mit einem Druckkompensationsventil
Vanne pour réguler un flux gazeux dans un moteur à combustion interne équipé d'un vanne de compensation de pression

(30) Priority: 10.09.2010 IT BO20100551
(43) Date of publication of application: 14.03.2012
(73) Proprietor: Magneti Marelli S.p.A., 20011 Corbetta (MI) (IT)
(72) Inventor: Colli, Marcello, 42100 Reggio Emilia (IT); Zibordi, Lisa, 40125 Bologna (IT); Matrullo, Stefano, 06135 Perugia (IT); Garofalo, Michele, 86100 Campobasso (IT)
(74) Representative: Jorio, Paolo

(56) References cited:
- EP-A2- 1 302 642
- EP-A2- 1 413 723
- DE-A1- 4 229 587
- JP-A- 2007 231 828
- JP-A- 2008 095 559

## Description

### TECHNICAL FIELD

The present invention relates to a valve for regulating the flow of a gas in an internal combustion engine.

The present invention is advantageously applied in a throttle valve for regulating the flow of fresh air sucked by an internal combustion engine, which disclosure below makes explicit reference without however being less general.

### PRIOR ART

A throttle valve is normally provided in internal combustion engines, which is arranged upstream from a suction manifold and regulates the air flow which is supplied to the cylinders. A typical throttle valve currently on the market has a valve body equipped with a tubular supply conduit through which the air flows which is sucked by the internal combustion engine; accommodated inside the supply conduit is a throttle plate, which is keyed onto a rotating shaft to rotate between an open position and a closed position of the supply conduit. The rotation of the throttle plate is controlled by an actuator device which comprises an electric motor coupled with the shaft of the throttle plate by means of a gear drive, and is feedback driven by using the measure of an angular position sensor.

The electric motor, gear drive and angular position sensor are arranged in a chamber of the valve body, which is closed by a removable lid which seals the chamber to prevent the infiltration of moisture which may induce corrosion in the metal components and may induce malfunctions in the electric and electronic components. The changes in temperature which occur both due to the change in the ambient temperature and due to the heat generated by the internal combustion engine result in pressure variations inside the chamber, which by being airtight, does not have gaseous exchanges with the external environment; such pressure variations may result in a decrease of the pressure inside the chamber with respect to the external environment, hence bringing the chamber under suction. The suction inside the chamber could promote the attraction and penetration of water from the external environment through the sealing surfaces between the valve body and the lid, and the attraction and penetration of water by the suction conduit through the sealing surfaces between the bearings and the shaft of the throttle plate; this unwanted penetration of water inside the chamber tends to occur due to the suction when the throttle valve is relatively "old" and hence the rubber walls of the seals lose part of their elasticity due to ageing.

Patent application JP2007231828A describes a valve for regulating the flow of a gas in an internal combustion engine as described in the pre-characterizing part of independent claim 1.

### DESCRIPTION OF THE INVENTION

It is the object of the present invention to make a valve for regulating the flow of a gas in an internal combustion engine, which does not have the above-described drawbacks while being easy and affordable to embody.

According to the present invention, a valve for regulating the flow of a gas in an internal combustion engine is made as claimed by the appended claims.

### BRIEF DESCRIPTION OF THE DRAWINGS

The present invention shall now be described with reference to the accompanying drawings, which illustrate several non-limiting embodiment examples thereof, in which:
- figure 1 is a perspective view of a throttle valve made according to the present invention;
- figure 2 is a front view with parts removed for clarity, of the throttle valve in figure 1;

- figure 3 is a perspective and exploded view of the throttle valve in figure 1;
- figure 4 is a perspective and partially cross-sectioned view of the throttle valve in figure 1;
- figure 5 is a perspective view of an alternative throttle valve made according to the present invention;
- figure 6 is a perspective view of a lid of the throttle valve in figure 5;
- figure 7 is a perspective and exploded view of the lid in figure 6;
- figure 8 is a front view on enlarged scale, of a hole made through the lid in figure 6;
- figure 9 is a perspective view on enlarged scale, and with parts removed for clarity, of an external protective castle of the lid in figure 6;
- figure 10 is a top view of the external protective castle (17) in figure 9;
- figure 11 is a sectional view along line XI-XI, of the external protective castle in figure 9;
- figure 12 is a sectional view along line XII-XII, of the external protective castle in figure 9;
- figure 13 is a perspective view of a further throttle valve made according to the present invention;
- figure 14 is a perspective view, and with parts removed for clarity, of the throttle valve in figure 13; and
- figure 15 is an exploded perspective view, and with parts removed for clarity, of the throttle valve in figure 13.

### PREFERRED EMBODIMENTS OF THE INVENTION

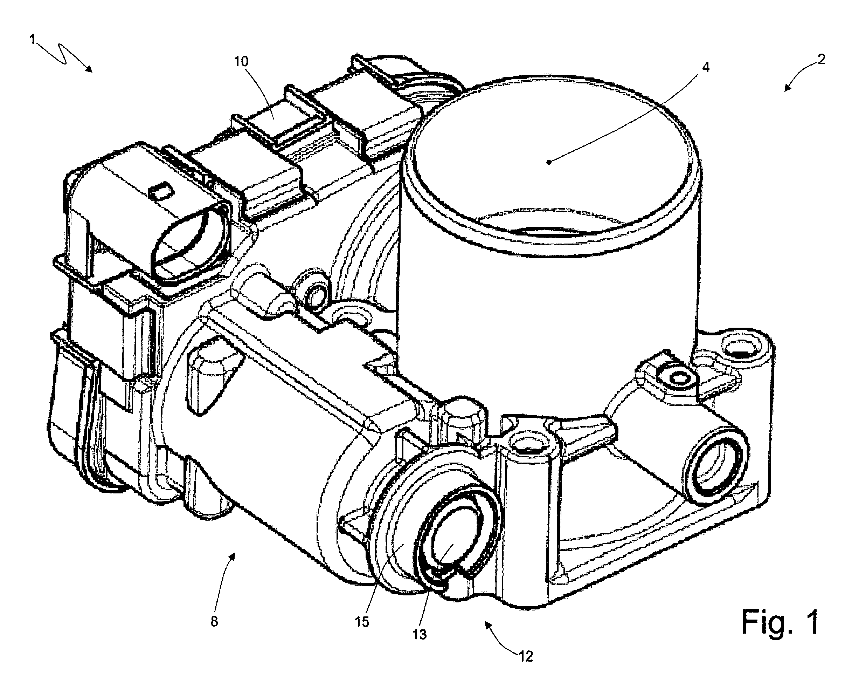

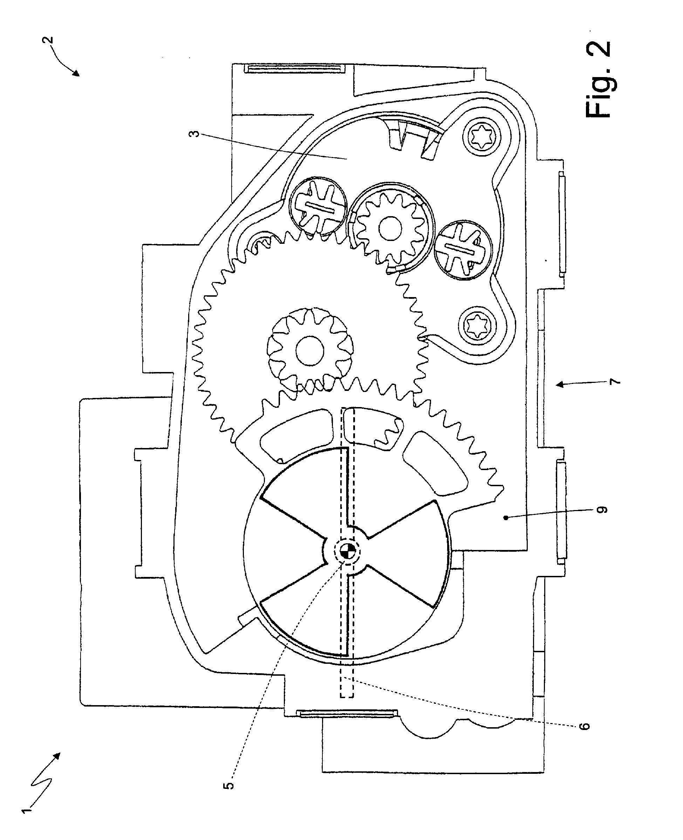

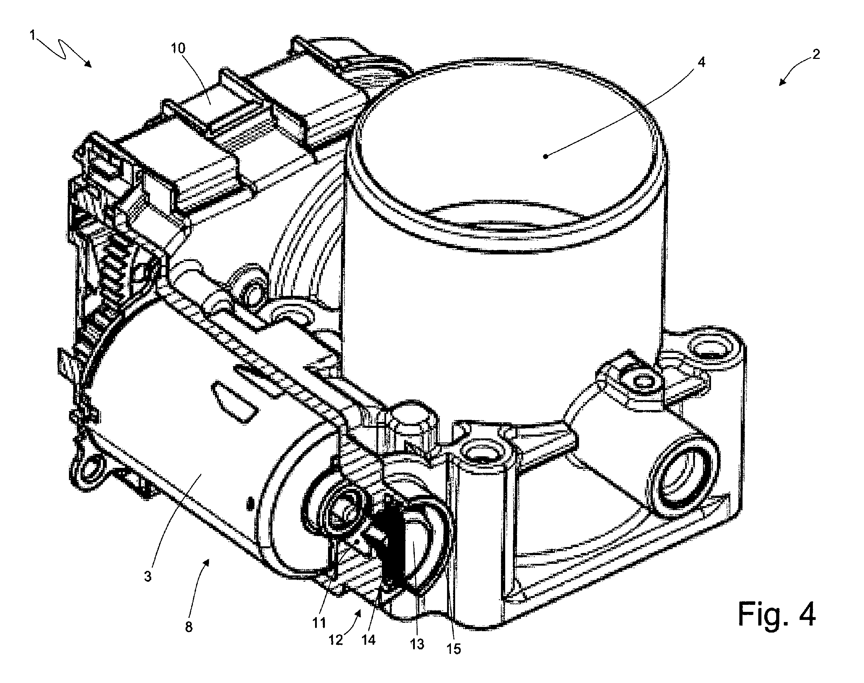

Number 1 in figure 1 indicates an electronically controlled throttle valve as a whole, for an internal combustion engine (not shown). The throttle valve 1 comprises a valve body 2 which is normally made of metal (typically aluminium). The valve body 2 accommodates an electric motor 3 (shown in figure 4), a tubular supply conduit 4 having a circular section through which the air flows which is sucked by the internal combustion engine, and a shutter 5 (diagrammatically shown with broken line in figure 2) shaped like a throttle valve. Shutter 5 engages the supply conduit 4 and rotates between a fully open position and a closing position of the supply conduit 4 due to the action of the electric motor 3.

As shown in figure 2, shutter 5 is keyed onto a shaft 6 (diagrammatically shown with broken line) which has a longitudinal axis of rotation for rotating between the open position and the closing position due to the action of motor 3. The electric motor 3 is coupled with shaft 6 of shutter 5 by means of a gear drive 7 which transmits motion from the shaft of the electric motor 3 to shaft 6 of shutter 5. According to a preferred embodiment, cylindrical-shaped electric motor 3 is arranged in a tubular housing 8 (shown in figure 1) arranged next to the supply conduit 4. The throttle valve 1 also comprises an angular position sensor of no contact type, which detects the angular position of shaft 6 carrying shutter 5; such a measure of the angular position of shaft 6 is used to feedback control the electric motor 3. The electric motor 3, gear drive 7, and the angular position sensor are arranged in a kinematic chamber 9, which is obtained in the valve body 2 and is closed by a removable lid 10 (shown in figures 1, 3 and 4) which is normally made of moulded plastic and seals the kinematic chamber 9.

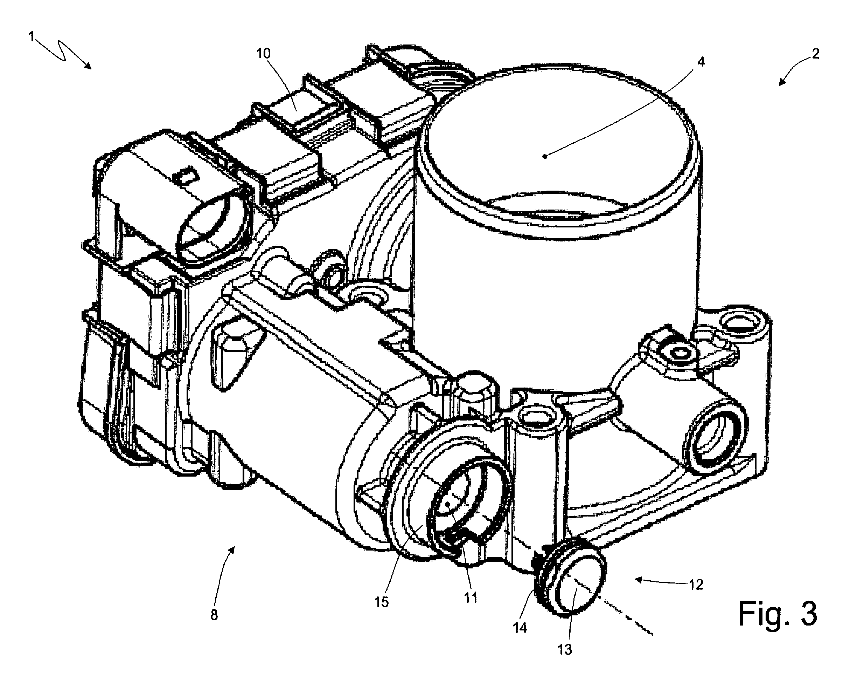

The throttle valve 1 comprises a compensation conduit 11 (partially shown in figures 3 and 4), which puts the kinematic chamber 9 in communication with the external environment, and a compensation valve 12 which is breathable (i.e. allows air to flow), water repellent (i.e. does not let water flow), and oil repellent (i.e. does not let oil flow), and is arranged along the compensation conduit 11. Due to the presence of the compensation valve 12, a gaseous exchange (i.e. of air) constantly occurs between the kinematic chamber 9 and the external environment and thereby the pressure inside the kinematic chamber 9 is always equal to the pressure of the external environment; moreover, due to the presence of the compensation valve 12, the inlet is prevented of water or of oil from the external environment into the kinematic chamber 9 hence protecting the kinematic chamber 9 from unwanted and harmful external contaminations.

The compensation valve 12 comprises a membrane 13 which is breathable, water repellent and oil repellent, and completely closes the compensation conduit 11; according to a preferred embodiment, membrane 13 is made of a breathable, water repellent and oil repellent material, such as e.g. Gore-tex^{®}, which has a loose enough weave to allow the crossing of air while being tight enough to prevent the crossing of water and oil molecules.

In the embodiment shown in figures 1-4, the compensation conduit 11 has a circular section and the compensation valve 12 comprises a support body 14 (shown in figures 3 and 4) which is normally made of moulded plastic material, is cylindrical in symmetry, supports membrane 13 (which is glued to the support body 14), and is snap-fitted (snap-fit retention) inside the compensation conduit 11 at an outlet opening of the compensation conduit 11 towards the external environment. At least one annular sealing gasket (O-ring) ensuring the sealing is preferably interposed between the support body 14 and the compensation conduit 11 obtained in the valve body 2.

Moreover, in the embodiment shown in figures 1-4, the compensation conduit 11 is obtained through a wall of the valve body 2 and in particular, is obtained through a bottom wall of the tubular housing 8 of the electric motor 3.

According to a preferred embodiment, a mechanical protective system is provided, which is arranged at the outlet opening of the compensation conduit 11 towards the external environment and shields the outlet opening from direct water jets (which may occur both when the engine is washed with water and when sprays are generated when puddles are crossed at high speed); indeed, membrane 13 is water repellent under normal conditions (i.e. when water is in contact with membrane 13 under stopped or almost stopped conditions), but is not completely waterproof and hence could be partially crossed by a water jet which hits against membrane 13 at a relatively high speed. In the embodiment shown in figures 1-4, the mechanical protective system comprises an annular protective wall 15 which rises cantilevered from a wall of the valve body 2 and completely surrounds the outlet opening of the compensation conduit 11 towards the external environment. Preferably, the annular protective wall 15 has a drain recess in the lower part for water drainage by gravity (that is to prevent water from stagnating in the lower part of the protective wall 15).

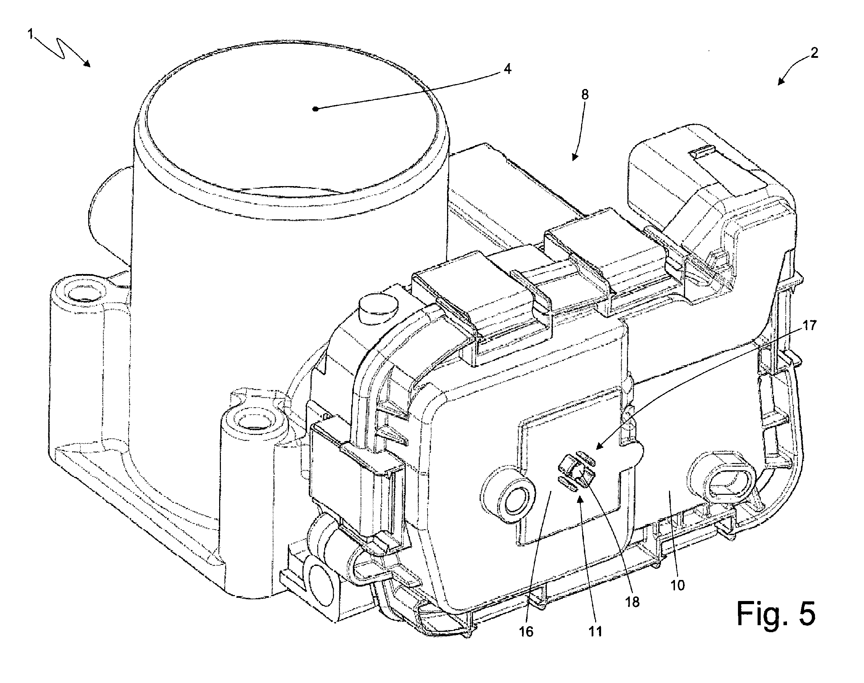

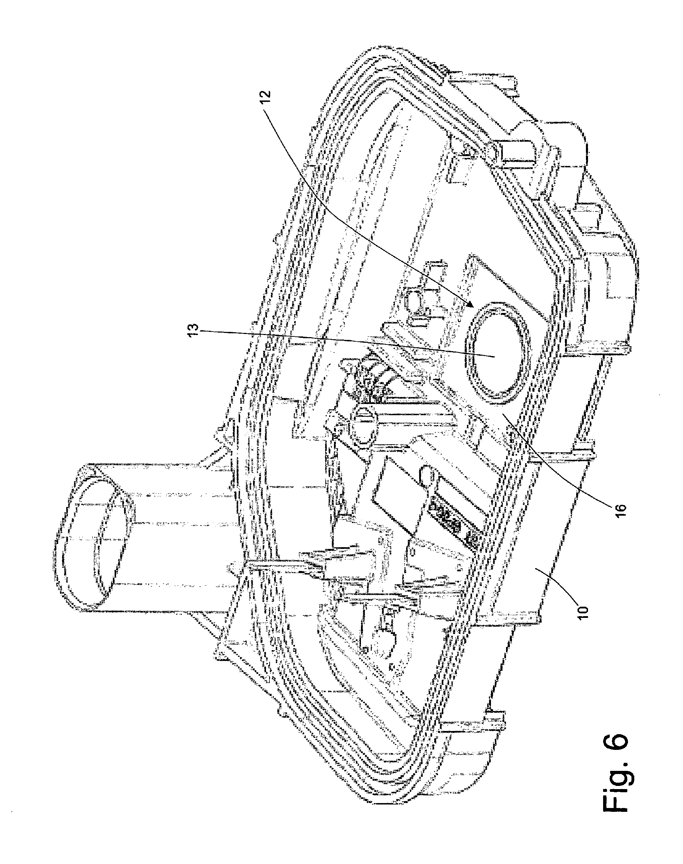

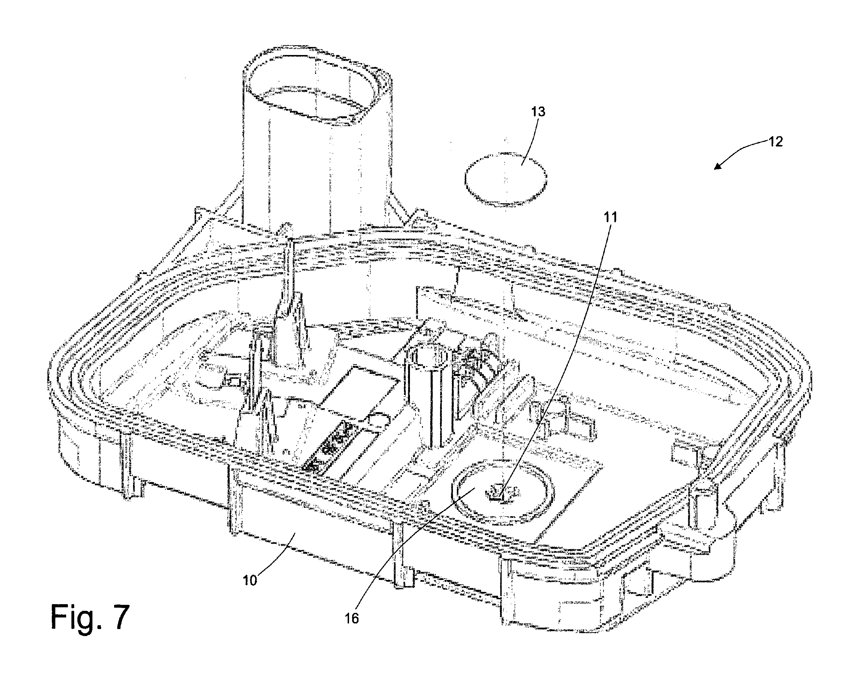

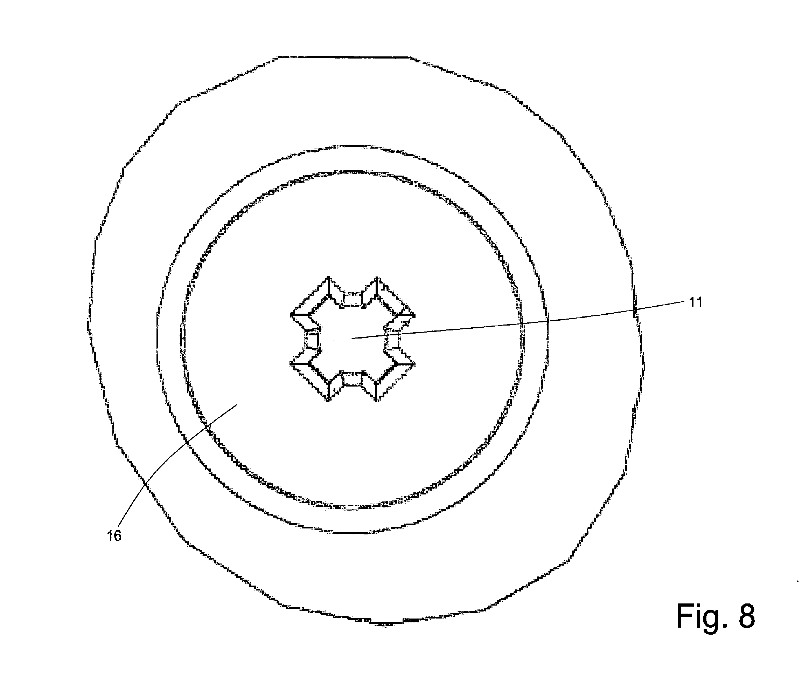

The embodiment of the throttle valve 1 shown in figures 5-7 differs from the throttle valve 1 shown in figures 1-4 due to the shape of the compensation valve 12, due to the position of the compensation conduit 11, due to the shape of the compensation conduit 11, and due to the shape of the mechanical protective system. In the embodiment of the throttle valve 1 shown in figures 5-7, the compensation conduit 11 is obtained through a wall 16 of lid 10 and has a cross section (as better shown in figure 8). Moreover, in the embodiment of the throttle valve 1 shown in figures 5-7, membrane 13 has a larger area with respect to the compensation conduit 11 and is glued to wall 16 of lid 10 (through which the compensation conduit 11 is obtained); in particular, membrane 13 is glued to the surface of wall 16 which delimits an inlet opening of the compensation conduit 11 towards the kinematic chamber 9 (as shown in figures 7 and 8). Lastly, in the embodiment of the throttle valve 1 shown in figures 5-7, the mechanical protective system comprises a protective castle 17 which surrounds the outlet opening of the compensation conduit 11 towards the external environment and a parallelepiped-shaped protuberance 18 which rises cantilevered from wall 16 of lid 10 (through which the outlet opening is obtained of the compensation conduit 11 towards the external environment).

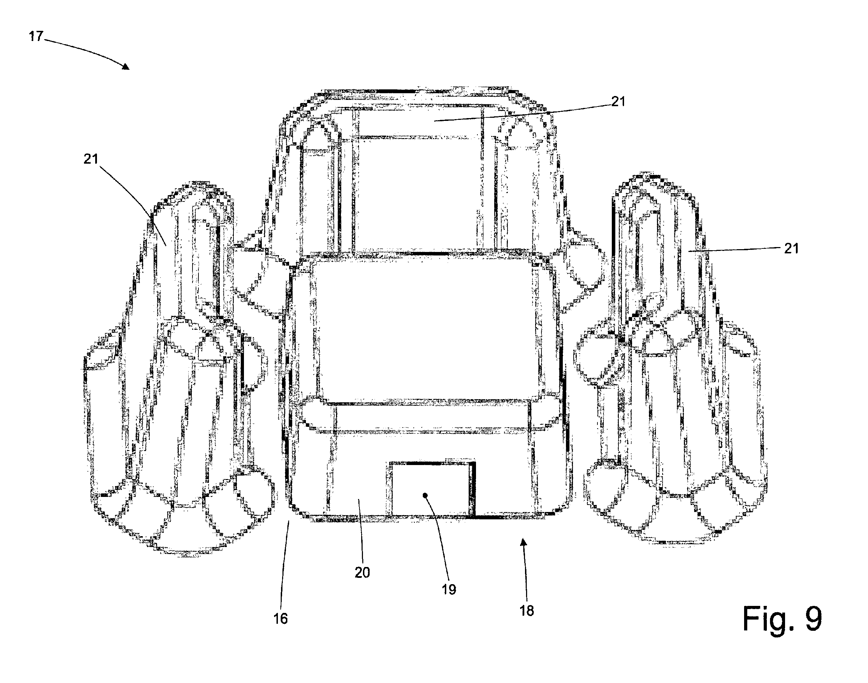

As better shown in figures 9-12, the outlet opening of the compensation conduit 11 towards the external environment is arranged perpendicular to wall 16 of lid 10 and consists of four holes 19 which are separate from each other, are arranged in a cross, and are obtained through corresponding walls 20 of protuberance 18 which are arranged perpendicular to wall 16. The protective castle 17 comprises four protective elements 21 which are separate from each other, are arranged in a cross, and are facing the corresponding four holes 19 forming the outlet opening of the compensation conduit 11 towards the external environment.

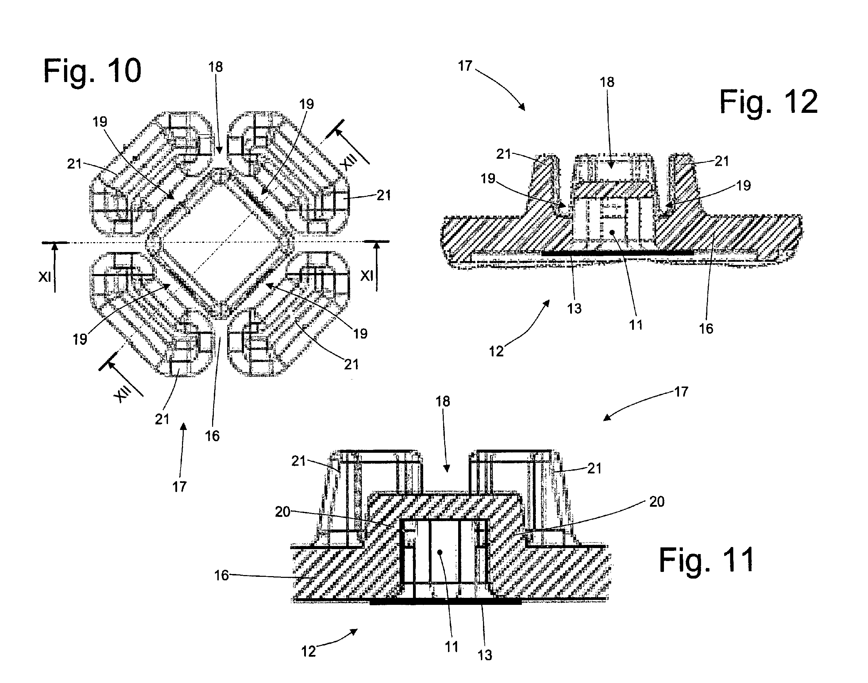

The protective system shown in figures 5-12 provides increased protection against water jets which are never able to directly reach the holes 19 forming the outlet opening of the compensation conduit 11 towards the external environment; moreover, membrane 13 is relatively far from the holes 19 (as shown in figures 11 and 12) and hence the water coming into contact with membrane 13 has completely lost is kinetic energy in all cases. Moreover, the protective system shown in figures 5-12 has no undercut whereby it is easily obtained by moulding by means of a single pair of moulds (i.e. one individual mould and one individual counter-mould); thereby, lid 10 which carries the compensation conduit 11 can be made at contained costs with moulded plastic.

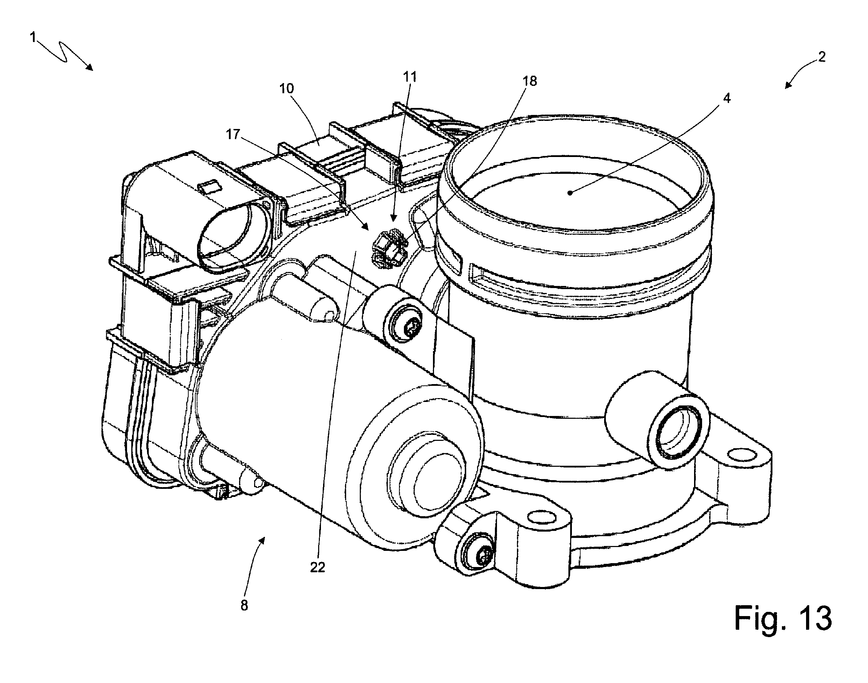

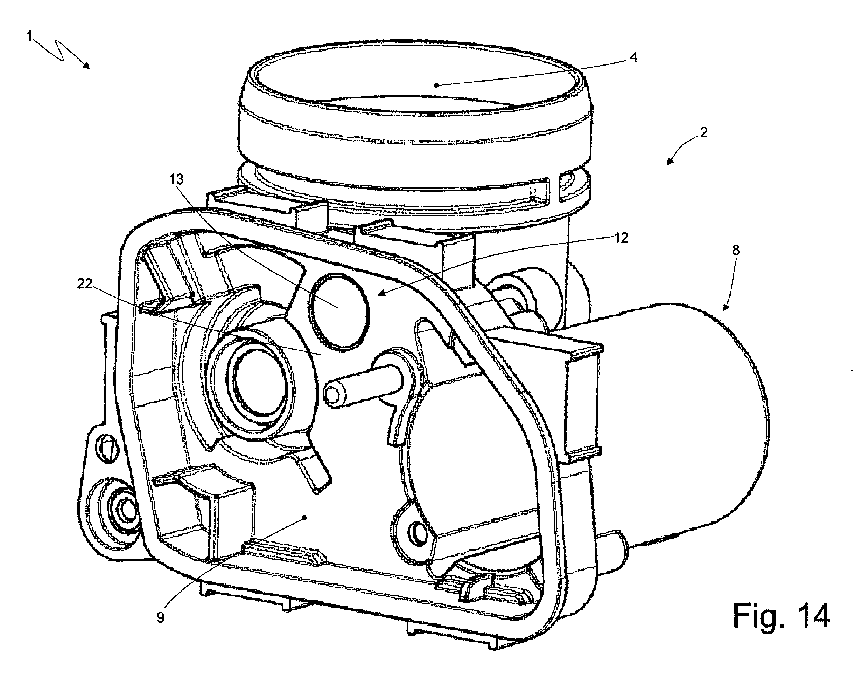

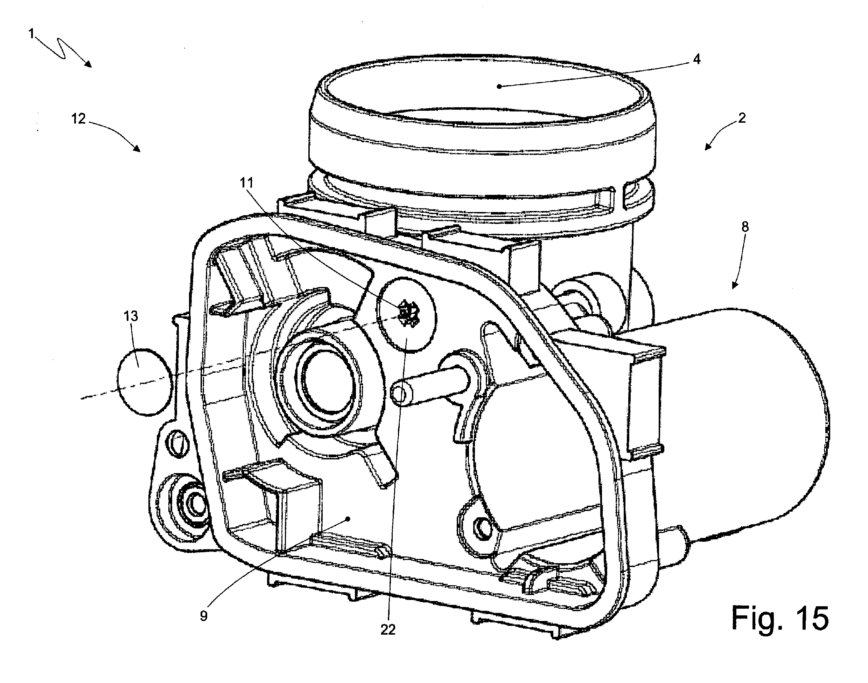

The embodiment of the throttle valve 1 shown in figures 13-15 only differs from the throttle valve 1 shown in figures 5-12 due to the position of the compensation conduit 11. In the throttle valve 1 shown in figures 5-12, the compensation conduit 11 is obtained through wall 16 of lid 10, while in the embodiment of the throttle valve 1 shown in figures 13-15, the compensation conduit 11 is obtained through a wall 22 of the valve body 2 (wall 22 of the valve body 2 is parallel to and facing wall 16 of lid 10). Instead, the shape of the compensation valve 12, the shape of the compensation conduit 11, and the shape of the mechanical protective system of the embodiment of the throttle valve 1 shown in figures 13-15 are identical to the ones of the embodiment of the throttle valve 1 shown in figures 5-12.

The embodiment of the throttle valve 1 shown in figures 1-4 is suitable for a valve body 2 made of metal (aluminium), because it provides using a support body 14 made of plastic material to which membrane 13 (membrane 13 may not be directly glued onto the metal) is glued, and because it provides a mechanical protective system with a simple shape which may also be simple to make with metal.

The embodiment of the throttle valve 1 shown in figures 5-12 is suitable for a valve body 2 made of metal (aluminium) coupled with a lid 10 made of moulded plastic, because membrane 13 is directly glued to wall 16 of lid 10 because the compensation conduit 11 and the mechanical protective system are arranged in lid 10 and may be easy to directly make in the moulding.

The embodiment of the throttle valve 1 shown in figures 13-15 is suitable for a valve body 2 at least partially made of moulded plastic (that is at least wall 22 of valve body 2 is to be made of moulded plastic), because membrane 13 is directly glued to wall 22 of the valve body 2 and because the compensation conduit 11 and the mechanical protective system are made in wall 22 and may be easy to directly make in the moulding.

The above-described throttle valve 1 has several advantages.

Firstly, the compensation conduit 11 coupled with the compensation valve 12 put the kinematic chamber 9 (which would otherwise be airtight) in communication with the external environment; thereby air flows in the two directions between kinematic chamber 9 and the external environment every time a pressure variation occurs in the kinematic chamber 9 due to a corresponding temperature variation (that is constant compensation occurs of the pressure variations between the kinematic chamber 9 and the external environment). By always having the kinematic chamber 9 at the same pressure as the external environment, a suction never occurs in the kinematic chamber 9 which may attract humidity inside the kinematic chamber 9.

Moreover, the above-described throttle valve 1 is simple and affordable to make when also starting from an existing throttle valve 1.

Clearly, the present invention which provides the presence of the compensation conduit 11 and of the compensation valve 12 (which is breathable, water repellent and oil repellent) is advantageously applied to any type of valve for regulating the flow of a gas in an internal combustion engine. In addition to the above-described application to a throttle valve 1 for regulating the flow of fresh air sucked by an internal combustion engine, an application is possible, for example, to a valve for an EGR system which regulates the flow of recirculated exhaust gases.

## Claims

1. A valve (1) for regulating the flow of a gas in an internal combustion engine; the valve (1) comprises:
a body valve (2);
a tubular supply conduit (4) defined in the body valve (2) for the flow of gas;
a shutter (5), which is placed inside the supply conduit (4) and moves between a fully open position and a closing position of the supply conduit (4);
an actuator (3) that moves the shutter (5);
a transmission (7) that connects mechanically the actuator (3) to the shutter (5);
a kinematic chamber (9) that is obtained in body valve (2) and houses the actuator (3) and the transmission (7), and
a lid (10) which closes the kinematic chamber (9) to seal the kinematic chamber (9);
a compensation conduit (11) that connects the kinematic chamber (9) to the external environment; and
a compensation valve (12) that is breathable and water repellent and is arranged along the compensation conduit (11) to keep the pressure inside the kinematic chamber (9) always equal to the pressure of the external environment while blocking at the same time the entry of water from the external environment into the kinematic chamber (9); and
a mechanic protective system that is disposed in correspondence of an exit opening of the compensation conduit (11) to the external environment and shields the exit opening from direct water jets;
the valve (1) is **characterized in that** the mechanical protective system comprises a protective castle (17) surrounding the exit opening of the compensation conduit (11) toward the external environment, the protective castle (17) comprises four protective elements (21) that are separated from each other, are placed in a cross shape, and are facing the exit opening.

2. A valve (1) according to claim 1, wherein the compensation valve (12) comprises a membrane (13) that is breathable and water repellent and completely closes the compensation conduit (11).

3. A valve (1) according to claim 2, wherein the membrane (13) is made of a breathable and water repellent material.

4. A valve (1) according to claim 2 or 3, wherein the compensation valve (12) comprises a support body (14) that supports the membrane (13) and is set to snap inside the compensation conduit (11) in correspondence of an exit opening of the compensation conduit (11) towards the external environment.

5. A valve (1) according to claim 2 or 3 wherein the membrane (13) has an area greater than the compensation conduit (11) and is glued to a wall (16, 22) through which the compensation conduit (11) is obtained.

6. A valve (1) according to one of the claims from 1 to 5, wherein the mechanical protective system comprises an annular protective wall (15) that completely surrounds the exit opening of the compensation conduit (11) toward the external environment.

7. A valve (1) according to claim 6, wherein the annular protective wall (15) has in the lower part a drain recess for water drainage.

8. A valve (1) according to one of the claims from 1 to 7, wherein the exit opening of the compensation conduit (11) to the external environment is perpendicular to a wall (16, 22) through which the compensation conduit (11) is obtained.

9. A valve (1) according to claim 8, wherein the exit opening is obtained through a protuberance (18) which rises cantilevered from the wall (16, 22) through which the compensation conduit (11) is obtained.

10. A valve (1) according to claim 9, wherein the exit opening comprises a plurality of holes (19) which are separated from each other and are drawn through the corresponding wall (20) of the protuberance (18).

11. A valve (1) according to claim 10, wherein the protective castle (17) comprises a plurality of protective elements (21) that are separated from one another and are facing corresponding holes (19) of the exit opening.

12. A valve (1) according to one of the claims from 1 to 11, wherein the compensation conduit (11) is obtained through a wall of the body valve (2).

13. A valve (1) according to claim 12, wherein the compensation conduit (11) is obtained through a back wall of a tubular housing (8) of the actuator (3).

14. A valve (1) according to one of the claims from 1 to 13, wherein the compensation conduit (11) is obtained through a wall (16) of the lid (10).

## Patentansprüche

1. Ventil (1) zum Regulieren der Strömung eines Gases in einer Brennkraftmaschine; wobei das Ventil (1) umfasst:
einen Ventilkörper (2);
eine rohrförmige Zufuhrleitung (4), die in dem Ventilkörper (2) für die Gasströmung definiert ist;
einen Verschluss (5), der in der Zufuhrleitung (4) angeordnet ist und sich zwischen einer vollständig geöffneten Position und einer geschlossenen Position der Zufuhrleitung (4) bewegt;
einen Aktor (3), der den Verschluss (5) bewegt;
ein Getriebe (7), das den Aktor (3) mit dem Verschluss (5) mechanisch verbindet;
eine kinematische Kammer (9), die in dem Ventilkörper (2) enthalten ist und den Aktor (3) und das Getriebe (7) enthält, und
ein Deckel (10), der die kinematische Kammer (9) verschließt, um die kinematische Kammer (9) abzudichten;
eine Ausgleichsleitung (11), die die kinematische Kammer (9) mit der äußeren Umgebung verbindet; und
ein Ausgleichsventil (12), das luftdurchlässig und
wasserabstoßend ist und längs der Ausgleichsleitung (11) angeordnet ist, um den Druck in der kinematischen Kammer (9) stets gleich dem Druck der äußeren Umgebung zu halten, während gleichzeitig der Eintritt von Wasser aus der äußeren Umgebung in die kinematische Kammer (6) blockiert wird; und
ein mechanisches Schutzsystem, das entsprechend an einer Austrittsöffnung der Ausgleichsleitung (11) in die äußere Umgebung angeordnet ist und die Austrittsöffnung vor direkten Wasserstrahlen abschirmt;
wobei das Ventil (1) **dadurch gekennzeichnet ist, dass** das mechanische Schutzsystem eine Schutzkrone (17) umfasst, die die Austrittsöffnung der Ausgleichsleitung (11) zu der äußeren Umgebung umgibt, wobei die Schutzkrone (17) vier Schutzelemente (21) umfasst, die voneinander getrennt sind, kreuzförmig angeordnet sind und der Austrittsöffnung zugewandt sind.

2. Ventil (1) nach Anspruch 1, wobei das Ausgleichsventil (12) eine Membran (13) umfasst, die luftdurchlässig und wasserabstoßend ist und die Ausgleichsleitung (11) vollständig verschließt.

3. Ventil (1) nach Anspruch 2, wobei die Membran (13) aus einem luftdurchlässigen und wasserabstoßenden Material hergestellt ist.

4. Ventil (1) nach Anspruch 2 oder 3, wobei das Ausgleichsventil (12) einen Tragkörper (14) umfasst, der die Membran (13) trägt und angeordnet ist, um in der Ausgleichsleitung (11) entsprechend einer Austrittsöffnung der Ausgleichsleitung (11) zu der äußeren Umgebung einzurasten.

5. Ventil (1) nach Anspruch 2 oder 3, wobei die Membran (13) eine Fläche besitzt, die größer ist als jene der Ausgleichsleitung (11), und an eine Wand (16, 22) geklebt ist, in der die Ausgleichsleitung (11) enthalten ist.

6. Ventil (1) nach einem der Ansprüche 1 bis 5, wobei das mechanische Schutzsystem eine ringförmige Schutzwand (15) umfasst, die die Austrittsöffnung der Ausgleichsleitung (11) zu der äußeren Umgebung vollständig umgibt.

7. Ventil (1) nach Anspruch 6, wobei die ringförmige Schutzwand (15) im unteren Teil eine
Entleerungsaussparung für eine Wasserentleerung besitzt.

8. Ventil (1) nach einem der Ansprüche 1 bis 7, wobei die Austrittsöffnung der Ausgleichsleitung (11) zu der äußeren Umgebung senkrecht zu einer Wand (16, 22) ist, in der die Ausgleichsleitung (11) enthalten ist.

9. Ventil (1) nach Anspruch 8, wobei die Austrittsöffnung in einer Erhebung (18) enthalten ist, der einseitig an der Wand (16, 22), in der die Ausgleichsleitung (11) enthalten ist, befestigt ist und sich hiervon erhebt.

10. Ventil (1) nach Anspruch 9, wobei die Austrittsöffnung mehrere Löcher (19) umfasst, die voneinander getrennt sind und durch die entsprechende Wand (20) der Erhebung (18) verlaufen.

11. Ventil (1) nach Anspruch 10, wobei die Schutzkrone (17) mehrere Schutzelemente (21) aufweist, die voneinander getrennt sind und entsprechenden Löchern (19) der Austrittsöffnung zugewandt sind.

12. Ventil (1) nach einem der Ansprüche 1 bis 11, wobei die Ausgleichsleitung (11) in einer Wand des Ventilkörpers (2) enthalten ist.

13. Ventil (1) nach Anspruch 12, wobei die
Ausgleichsleitung (11) in einer Rückwand eines rohrförmigen Gehäuses (8) des Aktors (3) enthalten ist.

14. Ventil (1) nach einem der Ansprüche 1 bis 13, wobei die Ausgleichsleitung (11) in einer Wand (16) des Deckels (10) enthalten ist.

## Revendications

1. Vanne (1) pour réguler le débit d'un gaz dans un moteur à combustion interne; la vanne (1) comprenant :
un corps de vanne (2);
un conduit d'alimentation tubulaire (4) défini dans le corps de vanne (2) pour le flux de gaz;
un volet (5) placé à l'intérieur du conduit d'alimentation (4) et mobile entre une position de pleine ouverture et une position d'obturation du conduit d'alimentation (4);
un actionneur (3) qui déplace le volet (5);
une transmission (7) qui relie mécaniquement l'actionneur (3) au volet (5);
une chambre cinématique (9) ménagée dans le corps de vanne (2) et recevant l'actionneur (3) et la transmission (7), et
un couvercle (10) pour fermer hermétiquement la chambre cinématique (9) ;
un conduit de compensation (11) qui relie la chambre cinématique (9) à l'environnement extérieur; et
une soupape de compensation perméable à l'air et hydrofuge, disposée le long du conduit de compensation (11) pour maintenir la pression à l'intérieur de la chambre cinématique (9) toujours égale à la pression de l'environnement extérieur tout en bloquant simultanément l'entrée d'eau de l'environnement extérieur dans la chambre cinématique (9); et
un système de protection mécanique disposé en correspondance avec une ouverture de sortie du conduit de compensation (11) vers l'environnement extérieur et protégeant l'ouverture de sortie contre les jets d'eau directs;
la vanne (1) étant **caractérisée en ce que** le système de protection mécanique comprend un château protecteur (17) entourant l'ouverture de sortie du conduit de compensation (11) vers l'environnement extérieur, le château protecteur (17) comprenant quatre éléments de protection (21) séparés les uns des autres, disposés en forme de croix et situés en regard de l'ouverture de sortie.

2. Vanne (1) selon la revendication 1, dans laquelle la soupape de compensation (12) comprend une membrane (13) qui est perméable à l'air et hydrofuge et obture complètement le conduit de compensation (11).

3. Vanne (1) selon la revendication 2, dans laquelle la membrane (13) est réalisée dans un matériau perméable à l'air et hydrofuge.

4. Vanne (1) selon la revendication 2 ou 3, dans laquelle la soupape de compensation (12) comprend un corps support (14) qui supporte la membrane (13) et est conçu pour s'encliqueter à l'intérieur du conduit de compensation (11) en correspondance avec une ouverture de sortie du conduit de compensation (11) vers l'environnement extérieur.

5. Vanne (1) selon la revendication 2 ou 3, dans laquelle la membrane (13) présente une surface plus grande que le conduit de compensation (11) et est collée à une paroi (16, 22) à travers laquelle est réalisé le conduit de compensation (11).

6. Vanne (1) selon l'une des revendications 1 à 5, dans laquelle le système de protection mécanique comprend une paroi de protection annulaire (15) qui entoure complètement l'ouverture de sortie du conduit de compensation (11) vers l'environnement extérieur.

7. Vanne (1) selon la revendication 6, dans laquelle la paroi de protection annulaire (15) présente, dans la partie inférieure, un évidement d'écoulement pour la vidange d'eau.

8. Vanne (1) selon l'une des revendications 1 à 7, dans laquelle l'ouverture de sortie du conduit de compensation (11) vers l'environnement extérieur est perpendiculaire à une paroi (16, 22) à travers laquelle est réalisé le conduit de compensation (11).

9. Vanne (1) selon la revendication 8, dans laquelle l'ouverture de sortie est réalisée au travers d'une protubérance (18) qui s'élève en porte-à-faux à partir de la paroi (16, 22) à travers laquelle est réalisé le conduit de compensation (11).

10. Vanne (1) selon la revendication 9, dans laquelle l'ouverture de sortie comprend une pluralité d'orifices (19) séparés les uns des autres et s'étendant à travers la paroi (20) correspondante de la protubérance (18).

11. Vanne (1) selon la revendication 10, dans laquelle le château protecteur (17) comprend une pluralité d'éléments de protection (21) séparés les uns des autres et situés en regard d'orifices (19) correspondants de l'ouverture de sortie.

12. Vanne (1) selon l'une des revendications 1 à 11, dans laquelle le conduit de compensation (11) est réalisé au travers d'une paroi du corps de vanne (2).

13. Vanne (1) selon la revendication 12, dans laquelle le conduit de compensation (11) est réalisé à travers une paroi arrière d'un bâti tubulaire (8) de l'actionneur (3).

14. Vanne (1) selon l'une des revendications 1 à 13, dans laquelle le conduit de compensation (11) est réalisé à travers une paroi (16) du couvercle (10).
